# FASCICULE DE BREVET EUROPEEN

(11) **EP 0 601 913 B1**
(45) Date de publication et mention de la délivrance du brevet: **14.05.1997**
(21) Numéro de dépôt: 93402905.9
(22) Date de dépôt: 30.11.1993
(51) Int. Cl.: B29C 63/10, B29C 63/00

(54) **Procédé et dispositif pour revêtir d'une enveloppe isolante un tube et tube obtenu par ce procédé**
Verfahren und Vorrichtung zum Umhüllen von einen Rohrleitung mit einem Isoliermantel und durch dieses Verfahren erhaltene Rohrleitung
Method and apparatus for coating a tube with an insulating envelope and tube obtained by this method

(30) Priorité: 09.12.1992 FR 9214860
(43) Date de publication de la demande: 15.06.1994
(73) Titulaire: ISOTUB COATING, 54240 Joeuf (FR)
(72) Inventeur: Cavalie, Bernard, F-59240 Dunkerque (FR)
(74) Mandataire: Lanceplaine, Jean-Claude

(56) Documents cités:
- AT-B- 364 972
- CH-A- 453 825
- DE-A- 2 247 738
- DE-A- 3 206 582
- US-A- 3 208 868

## Description

La présente invention a pour objet un procédé et une installation pour revêtir d'une enveloppe isolante un tube métallique et notamment un tube de pipeline susceptible d'être immergé.

Les tubes de pipeline sont généralement utilisés pour transporter des hydrocarbures et il est important que la température des produits transportés n'atteigne pas une température limite inférieure au-dessous de laquelle il se forme des dépôts importants dans les tubes.

De ce fait, les tubes doivent être revêtus d'une enveloppe isolante pour maintenir les hydrocarbures transportés à la température désirée.

De plus, l'épaisseur de l'enveloppe isolante est un critère important pour les caractéristiques thermiques des tubes ainsi revêtus.

Lorsque les tubes sont destinés à être immergés, l'enveloppe isolante est en contact avec l'eau de mer et la composition chimique du matériau constituant cette enveloppe est également un critère important de la qualité des tubes.

De préférence, le matériau doit avoir une conductivité thermique inférieure à 0,2Wm⁻¹K⁻¹ et une imperméabilité à l'eau assurant une absorption inférieure à 10% sur une période d'immersion de trois jours.

De plus, les caractéristiques mécaniques demandées à l'enveloppe isolante sont telles que le matériau utilisé doit pouvoir supporter une traction minimale de 3% sans détérioration.

Il est connu de revêtir les tubes de béton projeté.

Cependant, l'enveloppe en béton, bien qu'elle assure une masse linéaire permettant l'immersion des tubes présente l'inconvénient de se craqueler par manque d 'élasticité.

Il est également connu de revêtir les tubes d'une enveloppe isolante formée à partir de caoutchouc chargé d'acier ou de minerai.

Mais, le caoutchouc est un mauvais isolant et sa vulcanisation reste relativement onéreuse.

Il est également connu de revêtir les tubes d'une enveloppe isolante composée de bandes de polychlorure de vinyle (PVC) et de bandes de caoutchouc vulcanisé.

Une telle enveloppe présente de bonnes caractéristiques mécaniques, mais a comme inconvénient de ne pas résister à la température.

En effet, le polychlorure de vinyle dont elle est composée, a une faible tenue en température et particulièrement dans un intervalle compris entre 50 et 80°C.

On connaît dans le brevet EP-A-0 259 373 un tube en acier comportant un revêtement extérieur de mousse ou de feuilles compactes de polypropylène ou de polychlorure de vinyle appliquées par extrusion, soit sur la surface extérieure du tube, soit sur la surface d'un revêtement adhésif résistant à la corrosion préalablement appliqué sur la surface extérieure du tube.

Il est précisé dans ce brevet qu'après extrusion, le tube doit être refroidi à l'eau aussi bien par l'extérieur que par l'intérieur et que le refroidissement doit être rapide et important pour éviter l'affaissement du revêtement chaud ou son ovalisation par gravité.

Il est également précisé dans ce brevet que pour réaliser un revêtement composé de plusieurs couches, il est nécessaire de repasser dans l'extrudeuse plusieurs fois de suite le tube comportant déjà une couche.

Ainsi, l'enveloppe isolante peut avoir au moins 5 cm d'épaisseur et être déposée sur un tube de section, par exemple triangulaire.

Mais, ce type de procédé pour revêtir d'une enveloppe isolante un tube présente des inconvénients.

En effet, les différentes couches extrudées doivent être refroidies rapidement, lors de la réalisation d'un revêtement d'environ 5cm d'épaisseur, génèrant des hétérogénéités d'interface entre chacune des couches formant l'enveloppe isolante.

Il est également techniquement difficile de réaliser une enveloppe isolante comportant des couches de compositions chimiques variées.

De plus, chaque gamme de diamètre de tube demande un investissement spécifique du matériel pour le dépôt de l'enveloppe isolante et en particulier au niveau de la tête d'extrusion.

L'invention a pour but de proposer un procédé et une installation pour revêtir un tube métallique d'une enveloppe isolante et notamment un tube de pipeline, permettant de s'affranchir des inconvénients mentionnés ci-dessus.

L'invention a donc pour objet un procédé pour revêtir d'une enveloppe isolante thermique un tube et notamment un tube de pipeline susceptible d'être immergé, ladite enveloppe comprenant au moins une couche de polypropylène, caractérisé en ce que :
- on déplace le tube en translation longitudinale et simultanément on entraîne en rotation ledit tube,
- on chauffe le tube à une température supérieure à 50°C,
- on dépose sur la surface extérieure du tube une couche d'époxy,
- on enroule sur la couche d'époxy, une bande à l'état pâteux d'un matériau adhésif copolymère polypropylène,
- et on enroule, sur ladite bande de matériau adhésif, au moins une bande à l'état pâteux d'au moins un matériau isolant dont l'épaisseur est supérieure à 10mm, la composition chimique de chaque bande de matériau isolant étant choisie parmi un copolymère polypropylène, un polypropylène, un polypropylène contenant une polyoléfine thermoplastique, un polypropylène chargé de granulats métalliques et/ou de matières minérales, un polypropylène contenant un agent moussant et/ou un agent ignifugeant et/ou un agent de protection contre les rayonnements ultraviolets et/ou les chocs et/ou de protection anti-abrasion.

Selon d'autres caractéristiques de l'invention :
- on chauffe le tube à une température comprise entre 130 et 250°C,
- lesdites bandes sont obtenues par extrusion latérale par rapport au sens du déplacement du tube,
- on enroule, autour du tube, simultanément plusieurs bandes à l'état pâteux de compositions chimiques et physiques identiques ou différentes,
- chaque bande extrudée de matériau isolant a une épaisseur supérieure à 0,1 cm,
- chaque bande extrudée de matériau isolant possède un indice de fluidité compris entre 0,1 et 40g pour 10mn,
- la couche d'époxy est déposée sous forme d'une poudre époxydique et pulvérisée électrostatiquement et agglomérée par fusion,
- on effectue préalablement au chauffage du tube une chromatation de la surface extérieure dudit tube,
- on refroidit le tube revêtu,
- la vitesse périphérique de déplacement du tube est supérieure à 0,1 m/s.

L'invention a également pour objet une installation de revêtement d'un tube par une enveloppe isolante pour la mise en oeuvre du procédé mentionné ci-dessus, caractérisée en ce qu'elle comprend un bâti portant des galets de support et d'entraînement en translation et en rotation du tube, l'axe des galets étant incliné par rapport au plan de la section droite du tube et, successivement dans le sens de déplacement du tube :
- des moyens de chauffage du tube à une température supérieure à 50°C,
- un caisson de pulvérisation, sur la surface externe du tube, d'une poudre époxydique,
- des moyens d'alimentation et d'enroulement d'une bande à l'état pâteux d'un matériau adhésif autour de la couche d'époxy, disposés latéralement par rapport audit bâti,
- et des moyens d'alimentation et d'enroulement d'au moins une bande à l'état pâteux d'au moins un matériau isolant dont l'épaisseur est supérieure à 10mm, autour de la bande de matériau adhésif, disposés latéralement par rapport audit bâti (20), la composition chimique de chaque bande (5, 6) de matériau isolant étant choisie parmi un copolymère polypropylène, un polypropylène, un polypropylène contenant une polyoléfine thermoplastique, un polypropylène chargé de granulats métalliques et/ou de matières minérales, un polypropylène contenant un agent moussant et/ou un agent ignifugeant et/ou un agent de protection contre les rayonnements ultraviolets et/ou les chocs et/ou de protection anti-abrasion.

Selon d'autres caractéristiques de l'invention :
- l'installation comprend en outre des moyens de chromatation de la surface externe du tube situés en amont des moyens de chauffage par rapport au sens de déplacement dudit tube,
- l'installation comprend un caisson de refroidissement du tube revêtu situé, par rapport au sens de déplacement dudit tube, en aval des moyens d'alimentation et d'enroulement de ladite bande,
- les moyens d'alimentation et d'enroulement desdites bandes à l'état pâteux autour du tube sont formés par des extrudeuses.

L'invention a aussi pour objet un tube revêtu d'une enveloppe isolante et obtenu par le procédé mentionné ci-dessus, caractérisé en ce que ladite enveloppe isolante est composée successivement de :
- d'une couche d'époxy aggloméré par fusion,
- d'une bande d'adhésif copolymère polypropylène enroulée autour de la couche d'epoxy à l'état pâteux,
- et d'au moins une bande de polypropylène enroulée à l'état pâteux autour de la bande d'adhésif et dont l'épaisseur est supérieure à 10 mm.

Selon d'autres caractéristiques de l'invention :
- ladite enveloppe isolante comporte une couche externe de polypropylène associé à un composé choisi parmi une polyoléfine thermoplastique ou un agent moussant et/ou un agent ignifugeant et/ou un agent de protection contre les rayonnements ultraviolets et/ou les chocs et/ou de protection anti-abrasion,
- la couche de polypropylène est chargée de granulats métalliques et/ou de matières minérales,
- la surface externe du tube est préalablement chromatée.

L'invention sera mieux comprise à l'aide de la description qui va suivre, donnée uniquement à titre d'exemple et faite en se référant aux dessins annexés, dans lesquels :
- les Figures 1 à 4 sont des vues schématiques montrant les différentes étapes du procédé selon l'invention,
- la Figure 5 est une vue schématique d'une installation de revêtement pour la mise en oeuvre du procédé selon l'invention,
- la Figure 6 est une vue en coupe d'un tube revêtu par le procédé selon l'invention.

Le procédé selon l'invention permet de revêtir d'une enveloppe isolante, un tube 1 et notamment un tube de pipeline destiné à être immergé.

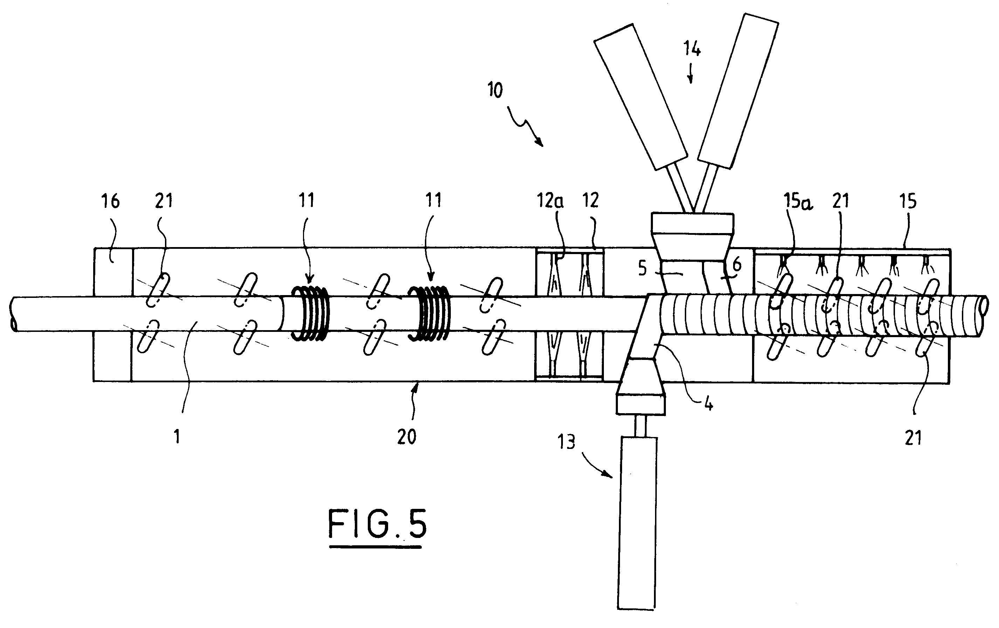

Durant les différentes étapes du procédé, le tube 1 est déplacé en translation longitudinale et simultanément entraîné en rotation dans une installation 10 représentée à la Fig.5 et qui sera décrite en détail ultérieurement.

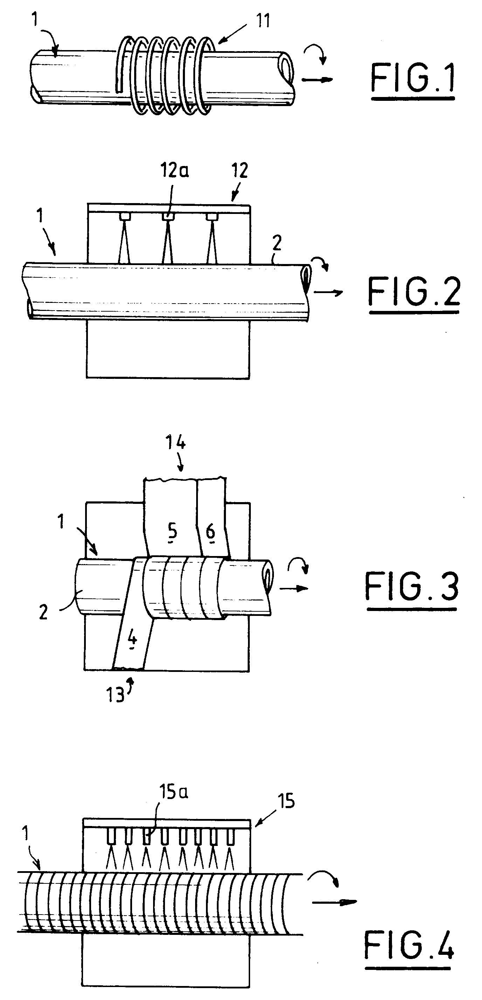

Tout d'abord, on chauffe le tube 1 par l'intermédiaire de moyens de chauffage 11 (Fig.1) de façon à amener ledit tube à une température supérieure à 50°C et de préférence comprise entre 130 et 250°C.

Ensuite, on dépose sur la surface extérieure du tube 1 une couche d'époxy 2 en poudre au moyen par exemple d'un caisson de pulvérisation 12 (Fig. 2).

La poudre époxydique adhère sur la surface chaude du tube 1 par effet électrostatique et fond sur ladite surface pour former un film homogène.

Ensuite, on enroule sur la couche d'époxy 2 une bande 4 à l'état pâteux d'un matériau adhésif (Fig. 3).

Ce matériau adhésif comprend par exemple en poids :
- de 59 à 94% de polypropylène ou un copolymère statistique propylène/éthylène ou un propylène/éthylène/butène 1 ou encore leurs mélanges avec un ou plusieurs polymères plastomériques choisis parmi les copolymères éthylène/vinyle/vinylacétate, LDPE, HDPE, polyamide polyuréthane,
- de 5 à 40% d'un polymère ou un mélange de polymères élastomériques choisis parmi les EPR, EPDM, copolymères blocs SEBS et SBS, et copolymères éthylène/acrylique d'éthyle,
- de 1 à 10% de polypropylène modifié avec l'anhydride maléïque ou l'acide isophorone bis maléique pour l'acide acrylique.

Comme représenté à la Fig. 3, simultanément à l'enroulement de la bande 4 de matériau adhésif, on enroule, sur ladite bande 4 de matériau adhésif, au moins une bande 5 à l'état pâteux par exemple moussé d'au moins un matériau isolant comme par exemple du polypropylène.

Le polypropylène utilisé comprend en poids de 92 à 100% d'un polymère thermoplastique choisi parmi un copolymère cristallin du polypropylène contenant 2 à 25% en mole d'éthylène et/ou alpha-oléfine C4 - C10, composition hétérophasique comprenant un polymère du type précédemment mentionné et d'un ou plusieurs copolymères oléfiniques élastomériques.

Les polymères pouvant être utilisés dans ce procédé sont :
- un polypropylène isotactique avec un indice d'isotacticité pouvant atteindre 99,
- un copolymère statistique propylène/éthylène avec un taux d'éthylène variant de 1 à 6% en poids et de préférence entre 2 et 4% en poids,
- un copolymère statistique polypropylène/éthylène/1.butène avec un taux d'éthylène de 2 à 3% en poids et de 1.butène de 4,5 à 5,6% en poids,
- un mélange des polymères ci-dessus mentionnés avec un élastomère EPR et EPDM, le EPR (éthylène propylène rubber) étant éventuellement réticulé et contenant de préférence de 5 à 40% en poids d'élastomère,
- des compositions hétérophasiques obtenues par polymérisation séquentielle stéréospécifique du polypropylène avec éthylène et/ou alpha-oléfine C4 - C10, éventuellement en présence de faible quantité de l.diène tels que butadiène, 1,4 héxadiène, 1,5 héxadiène et éthylène norbornène-1.

Les exemples de alpha oléfine C4-C10 qui peuvent être présents dans les polymères précédemment mentionnés sont le butène-1,4, le méthylpentène-1 et l'hexène-1.

Dans les compositions hétérophasiques, l'éthylène et/ou les alpha oléfines peuvent être présents en quantité jusqu'à 50% en poids.

Les caractéristiques physiques du polypropylène utilisé telles que la viscosité, la densité et les conditions de mise en mouvement du tube, en fonction du diamètre, permettent de manière surprenante, d'une part, le maintien par inertie d'une couche de polypropylène d'épaisseur supérieure à 10mm et pouvant atteindre quelques centimètres, 1 à 15 cm et, d'autre part, la possibilité de supporter le tube en appui sur cette couche à l'état pâteux.

Pour assurer au tube de meilleures caractéristiques de protection contre les projections et chocs, ou contre l'humidité et/ou les rayonnements ultraviolets et/ou le feu et/ou l'abrasion, il est possible d'enrouler une bande 6 de polypropylène à l'état pâteux (Fig. 3) contenant par exemple une polyoléfine thermoplastique noir de carbone ou un ignifugeant.

Après l'opération de revêtement, le tube 1 ainsi revêtu de l'enveloppe isolante est toujours maintenu en rotation et en translation et transféré vers un caisson de refroidissement 15 (Fig. 4) où il est aspergé par exemple d'eau et/ou d'air dans le but d'accélérer la solidification de l'enveloppe pour essentiellement diminuer le temps global de l'opération de revêtement et permettre au supportage statique de ladite enveloppe isolante sans produire de déformation du matériau.

L'installation représentée schématiquement à la Fig. 5 pour revêtir de l'enveloppe isolante le tube 1 comprend un bâti fixe 20 comportant des galets 21 de support et d'entraînement en translation et en rotation du tube 1.

Les galets 21 sont répartis sur toute la longueur du bâti 20 et de part et d'autre de l'axe de déplacement longitudinal du tube 1 et les axes de ces galets 21 sont inclinés par rapport au plan de la section droite du tube 1.

Dans une telle position, les galets 21 entraînés en rotation, déplacent le tube 1 en translation et également en rotation à une vitesse angulaire permettant un avancement de 1cm à 20cm à chaque rotation du tube et une vitesse périphérique supérieure à 0,1 m/s pour un diamètre moyen du tube compris entre 50 et 1500 mm.

L'installation comporte successivement dans le sens de déplacement du tube 1, des moyens 11 de chauffage du tube 1 à une température supérieure à 50°C et de préférence comprise entre 130 et 250°C.

Ces moyens 11 de chauffage sont par exemple par induction électromagnétique.

L'installation 10 comprend en aval des moyens 11 de chauffage du tube 1, un caisson 12 de pulvérisation sur la surface externe dudit tube d'une poudre époxydique.

A cet effet, le caisson 12 comporte des pistolets 12a de projection de la poudre époxydique sur la surface chaude du tube 1.

Cette poudre époxydique adhère par effet électrostatique sur la surface du tube 1 pour former une couche homogène.

L'installation 10 comprend également en aval du caisson 12 par rapport au sens du déplacement du tube 1 :
- des moyens 13 d'alimentation et d'enroulement de la bande 5 à l'état pâteux formant une couche en matériau adhésif autour de la couche 2 d'époxy,
- des moyens 14 d'alimentation et d'enroulement d'au moins une bande 5 et 6 à l'état pâteux d'au moins un matériau isolant à base de polypropylène.

Ces moyens 13 et 14 sont formés par des extrudeuses disposées latéralement par rapport au bâti 20.

Ces extrudeuses sont placées en série de façon que chacune d'elles débite une bande de matériau spécifique en composition, comme en épaisseur. Le principe de l'enroulement latéral des bandes à l'état pâteux permet la superposition desdites bandes afin d'obtenir l'épaisseur voulue et des couches de compositions voulues.

Ainsi, les bandes superposées forment une enveloppe totalement homogène sans aucun défaut de décohésion.

Les épaisseurs des différentes bandes sont généralement choisies en fonction de la tenue mécanique, de la densité et des caractéristiques rhéologiques du matériau utilisé.

Par exemple, une bande à base de polypropylène moussé et chargé en granulats métalliques et/ou de matières minérales comme par exemple des sels minéraux peut avoir une densité variant de 2 à 9 Kg/dm³ ce qui influe sur son comportement lors de l'enroulement.

D'autre part, une bande à base de polypropylène peut être chargée avec une matière par exemple minérale, comme par exemple du talc, de la craie, du kaolin, de la wollastonite, du sulfate de baryum, du mica, des fibres ou des billes de verre, de graphite, du noir de carbone ou encore d'une matière organique par exemple de la poudre ou des fibres de cellulose.

Elle peut également être modifiée par des polymères comme par exemple PS, PA ou PPO.

Après les moyens 13 et 14 d'alimentation et d'enroulement des différentes bandes, l'installation comprend un caisson 15 de refroidissement du tube 1 revêtu et comportant des rampes 15a par exemple d'aspersion d'eau et/ou de projection d'air.

Comme représenté à la Fig. 5, l'installation 10 peut également comporter, en amont des moyens 11 de chauffage du tube 1, des moyens 16 de chromatation de la surface nue du tube 1.

Cette chromatation assure une qualité d'adhérence à la couche d'époxy 2 déposée ultérieurement sur la surface externe du tube 1.

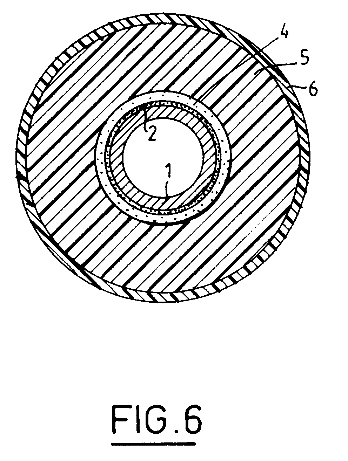

Le tube 1 ainsi revêtu comporte, comme représenté à la Fig. 6, sur sa surface externe :
- une couche 2 d'époxy aggloméré par fusion d'une épaisseur inférieure à 1mm,
- une couche 4 d'adhésif copolymère polypropylène d'épaisseur comprise entre 0,2 et 1mm,
- et au moins une couche 5 de polypropylène d'épaisseur supérieure à 10mm.

Un tel tube réalisé par le procédé selon l'invention comporte une enveloppe isolante homogène dans la masse et entre les différentes couches composant ladite enveloppe. En effet, les différentes bandes formant les couches sont déposées simultanément et à l'état pâteux ce qui assure une adhérence totale des bandes entre elles.

Par ailleurs, le tube 1 peut comporter une couche extérieure 6 conférant au tube des propriétés par exemple de résistance aux chocs, de résistance au feu, à l'humidité, aux rayonnements ultraviolets, à l'abrasion ainsi qu'une coloration déterminée.

## Revendications

1. Procédé pour revêtir d'une enveloppe isolante thermique un tube (1) et notamment un tube de pipeline susceptible d'être immergé, ladite enveloppe comprenant au moins une couche de polypropylène, caractérisé en ce que :
- on déplace le tube (1) en translation longitudinale et simultanément on entraîne en rotation ledit tube,
- on chauffe le tube (1) à une température supérieure à 50°C,
- on dépose sur la surface externe du tube (1) une couche (2) d'époxy,
- on enroule sur la couche (2) d'époxy, une bande (4) à l'état pâteux d'adhésif copolymère polypropylène,
- et on enroule, sur ladite bande (4) de matériau adhésif, au moins une bande (5, 6) à l'état pâteux d'au moins un matériau isolant dont l'épaisseur est supérieure à 10mm, la composition chimique de chaque bande (5, 6) de matériau isolant étant choisie parmi un copolymère polypropylène, un polypropylène, un polypropylène contenant une polyoléfine thermoplastique, un polypropylène chargé de granulats métalliques et/ou de matières minérales, un polypropylène contenant un agent moussant et/ou un agent ignifugeant et/ou un agent de protection contre les rayonnements ultraviolets et/ou les chocs et/ou de protection anti-abrasion.

2. Procédé selon la revendication 1, caractérisé en ce que l'on chauffe le tube (1) à une température comprise entre 130 et 250°C.

3. Procédé selon la revendication 1, caractérisé en ce que lesdites bandes (4, 5, 6) sont obtenues par extrusion latérale par rapport au sens de déplacement du tube (1).

4. Procédé selon les revendications 1 et 3, caractérisé en ce que l'on enroule autour du tube (1) simultanément plusieurs bandes (5, 6) à l'état pâteux d'au moins un matériau isolant de compositions chimiques et physiques identiques ou différentes.

5. Procédé selon l'une quelconque des revendications précédentes, caractérisé en ce que chaque bande (5, 6) extrudée de matériau isolant a une épaisseur supérieure à 0,1 cm.

6. Procédé selon l'une quelconque des revendications 1 à 4, caractérisé en ce que chaque bande (5, 6) extrudée de matériau isolant possède un indice de fluidité compris entre 0,1 et 40g pour 10 mn.

7. Procédé selon la revendication 1, caractérisé en ce que la couche (2) d'époxy est déposée sous forme d'une poudre époxydique pulvérisée électrostatiquement et agglomérée par fusion.

8. Procédé selon la revendication 1, caractérisé en ce que l'on effectue préalablement au chauffage du tube (1) une chromatation de la surface externe dudit tube.

9. Procédé selon la revendication 1, caractérisé en ce que l'on refroidit le tube (1) revêtu.

10. Procédé selon l'une quelconque des revendications précédentes, caractérisé en ce que la vitesse périphérique de déplacement du tube (1) est supérieure à 0,1m/s.

11. Installation de revêtement d'un tube (1) par une enveloppe isolante thermique pour la mise en oeuvre du procédé selon l'une quelconque des revendications précédentes, caractérisée en ce qu'elle comprend un bâti (20) comportant des galets (21) de support et d'entraînement en translation et en rotation du tube (1), l'axe des galets (21) étant incliné par rapport au plan de la section droite du tube (1) et, successivement dans le sens de déplacement dudit tube :
- des moyens (11) de chauffage du tube (1) à une température supérieure à 50°C,
- un caisson (12) de pulvérisation, sur la surface externe du tube (1) d'une poudre époxydique,
- des moyens (13) d'alimentation et d'enroulement d'une bande (4) à l'état pâteux d'adhésif copolymère polypropylène autour de la couche (2) d'époxy, disposés latéralement par rapport audit bâti (1),
- et des moyens (14) d'alimentation et d'enroulement d'au moins une bande (5, 6) à l'état pâteux d'au moins un matériau isolant dont l'épaisseur est supérieure à 10mm, autour de la bande (4) de matériau adhésif, disposés latéralement par rapport audit bâti (20), la composition chimique de chaque bande (5, 6) de matériau isolant étant choisie parmi un copolymère polypropylène, un polypropylène, un polypropylène contenant une polyoléfine thermoplastique, un polypropylène chargé de granulats métalliques et/ou de matières minérales, un polypropylène contenant un agent moussant et/ou un agent ignifugeant et/ou un agent de protection contre les rayonnements ultraviolets et/ou les chocs et/ou de protection anti-abrasion.

12. Installation selon la revendication 11, caractérisée en ce qu'elle comprend en outre des moyens (16) de chromatation de la surface externe du tube (1) situés en amont des moyens (11) de chauffage (1) par rapport au sens de déplacement dudit tube (1).

13. Installation selon la revendication 11, caractérisée en ce qu'elle comprend un caisson (15) de refroidissement du tube (1) revêtu situé, par rapport au sens de déplacement dudit tube (1), en aval des moyens (14) d'alimentation et d'enroulement de ladite bande (5, 6).

14. Installation selon la revendication 11, caractérisée en ce que les moyens (13, 14) d'alimentation et d'enroulement desdites bandes (4, 5, 6) à l'état pâteux sont formés par des extrudeuses.

15. Tube revêtu d'une enveloppe isolante et obtenu par le procédé selon l'une quelconque des revendications 1 à 10, caractérisé en ce que ladite enveloppe comporte successivement :
- une couche (2) d'époxy aggloméré par fusion,
- une bande (4) d'adhésif copolymère polypropylène enroulée autour de la couche d'epoxy à l'état pâteux,
- et au moins une bande (5) de polypropylène enroulée à l'état pâteux autour de la bande d'adhésif et dont l'épaisseur est supérieure à 10mm.

16. Tube selon la revendication 15, caractérisé en ce que ladite enveloppe isolante comporte une couche externe (6) de polypropylène associé à un composé choisi parmi une polyoléfine thermoplastique et/ou un agent moussant et/ou un agent ignifugeant et/ou un agent de protection contre les rayonnements ultraviolets et/ou les chocs et/ou de protection anti-abrasion.

17. Tube selon la revendication 16, caractérisé en ce que la couche (5) de polypropylène est chargée de granulats métalliques et/ou de matières minérales.

18. Tube selon la revendication 15, caractérisé en ce que la surface externe du tube (1) est préalablement chromatée.

## Claims

1. A method of covering a tube (1), in particular an immersible pipeline tube, with a thermally insulating jacket comprising at least one layer of polypropylene, characterised in that:
- the tube (1) is displaced longitudinally and simultaneously rotated;
- the tube (1) is heated to a temperature higher than 50°C;
- a layer (2) of epoxy is deposited on the outer surface of the tube (1);
- a pasty strip (4) of adhesive polypropylene copolymer is wound onto the layer (2) of epoxy, and
- at least one pasty strip (5, 6) of at least one insulating material of a thickness greater than 10mm is wound onto the said strip (4) of adhesive material, the chemical composition of each strip (5, 6) of insulating material being selected from a polypropylene copolymer, a polypropylene, a polypropylene containing a thermoplastic polyolefin, a polypropylene laden with metal aggregates and/or mineral substances, a polypropylene containing a foaming agent and/or a flame-retarding agent and/or an agent providing protection against ultraviolet radiation and/or shocks and/or an anti-abrasive.

2. A method according to claim 1, characterised in that the tube (1) is heated to a temperature between 130°C and 250°C.

3. A method according to claim 1, characterised in that the said strips (4, 5, 6) are formed by lateral extrusion relative to the direction of displacement of the tube (1).

4. A method according to claims 1 and 3, characterised in that a plurality of pasty strips (5, 6) of at least one insulating material having identical or different chemical and physical compositions are simultaneously wound round the tube (1).

5. A method according to any one of the preceding claims, characterised in that each extruded strip (5, 6) of insulating material has a thickness greater than 0.1 cm.

6. A method according to any one of claims 1 to 4, characterised in that each extruded strip (5, 6) of insulating material has a flow index of between 0.1g and 40g per 10 mn.

7. A method according to claim 1, characterised in that the layer (2) of epoxy is deposited in the farm of an electrostatically pulverised epoxide powder and is agglomerated by fusion.

8. A method according to claim 1, characterised in that the outer surface of the tube (1) is chromated prior to heating of the said tube.

9. A method according to claim 1, characterised in that the covered tube (1) is cooled.

10. A method according to any one of the preceding claims, characterised in that the peripheral speed of displacement of the tube (1) is greater than 0.1 m/s.

11. Apparatus for covering a tube (1) with a thermally insulating jacket and for carrying out the method according to any one of the preceding claims, characterised in that it comprises a frame (20) having rollers (21) for supporting and for displacing and rotating the tube (1), the axis of the rollers (21) being inclined relative to the plane of the cross-section of the tube (1), and, successively in the direction of displacement of the said tube:
- means (11) for heating the tube (1) to a temperature higher than 50°C;
- a chamber (12) for pulverisation of an epoxide powder on the outer surface of the tube (1);
- means (13) for supplying and winding a pasty strip (4) of adhesive polypropylene copolymer round the layer (2) of epoxy, the means (13) being arranged laterally relative to the said frame (1), and
- means (14) for supplying and winding at least one pasty strip (5, 6) of at least one insulating material of a thickness greater than 10mm round the strip (4) of adhesive material, the means (14) being arranged laterally relative to the said frame (20), the chemical composition of each strip (5, 6) of insulating material being selected from a polypropylene copolymer, a polypropylene, a polypropylene containing a thermoplastic polyolefin, a polypropylene loaded with metal aggregates and/or mineral substances, a polypropylene containing a foaming agent and/or a flame-retarding agent and/or an agent providing protection against ultraviolet radiation and/or shocks and/or an anti-abrasive.

12. Apparatus according to claim 11, characterised in that it additionally comprises means (16) for chromation at the outer surface of the tube (1), the means (16) being arranged upstream of the heating means (11) relative to the direction of displacement of the said tube (1).

13. Apparatus according to claim 11, characterised in that it comprises a chamber (15) for cooling the covered tube (1), the chamber (15) being arranged relative to the direction of displacement of the said tube (1), downstream of the means (14) for supplying and winding the said strip (5, 6).

14. Apparatus according to claim 11, characterised in that the means (13, 14) for supplying and winding the said pasty strips (4, 5, 6) are formed by extruders.

15. A tube covered with an insulating jacket and produced by the method according to any one of claims 1 to 10, characterised in that the said jacket successively comprises:
- a layer (2) of epoxy agglomerated by fusion;
- a strip (4) of adhesive polypropylene copolymer wound round the pasty layer of epoxy, and
- at least one pasty strip (5) of polypropylene wound round the strip of adhesive and of a thickness greater than 10mm.

16. A tube according to claim 15, characterised in that the said insulating jacket comprises on outer layer (6) of polypropylene combined with a compound selected from a thermoplastic polyolefin and/or a foaming agent and/or a flame-retarding agent and/or an agent providing protection against ultraviolet radiation and/or shocks and/or an anti-abrasive.

17. A tube according to claim 16, characterised in that the layer (5) of polypropylene is laden with metal aggregates and/or mineral substances.

18. A tube according to claim 15, characterised in that the outer surface of the tube (1) is chromated beforehand.

## Patentansprüche

1. Verfahren zum Umhüllen einer Rohrleitung (1), im besonderen einer Pipeline-Rohrleitung, die geeignet ist, im Meer versenkt zu werden, mit einem thermischen Isoliermantel, welcher wenigstens eine Polyropylenschicht umfaßt, dadurch gekennzeichnet, daß man:
- die Rohrleitung (1) in einer Längsverschiebung verlagert und gleichzeitig zum Rotieren bringt,
- die Rohrleitung (1) auf eine Temperatur über 50 °C erhitzt,
- auf der äußeren Oberfläche der Rohrleitung (1) eine Epoxidschicht (2) ablagert,
- auf die Epoxidschicht (2) einen Polypropylencopolymer-Klebstoffstreifen (4) in zähflüssigem Zustand aufrollt,
- und auf den Klebstoffmaterialstreifen (4) wenigstens einen Streifen (5, 6) zumindest eines Isoliermaterials in zähflüssigem Zustand, dessen Dicke mehr als 10 mm betragt, aufrollt, wobei die chemische Zusammensetzung jedes Isoliermaterialsstreifens (5, 6) ein Polypropylencopolymer, ein Polypropylen, ein Polypropylen, enthaltend ein thermoplastisches Polyolefin, ein Polypropylen, welches Metallgranulate und/oder Mineralstoffe enthält, und/oder ein Polypropylen, enthaltend ein Schaummittel und/oder ein Feuerfestigkeitsmittel und/oder ein Mittel zum Schutz gegen ultraviolette Strahlen und/oder Stöße und/oder zum Schutz gegen Abrieb, ist.

2. Verfahren nach Anspruch 1, dadurch gekennzeichnet, daß man die Rohrleitung (1) auf eine Temperatur zwischen 130 und 250 °C erhitzt.

3. Verfahren nach Anspruch 1, dadurch gekennzeichnet, daß die Streifen (4, 5, 6) durch laterale Extrusion, bezogen auf die Verlagerungsrichtung der Rohrleitung (1), erhalten werden.

4. Verfahren nach den Ansprüchen 1 und 3, dadurch gekennzeichnet, daß man um die Rohrleitung (1) gleichzeitig mehrere Streifen (5, 6) wenigstens eines Isoliermaterials chemisch und physikalisch gleicher oder verschiedener Zusammensetzungsn in zähflüssigem Zustand aufrollt.

5. Verfahren nach einem der vorhergehenden Ansprüche, dadurch gekennzeichnet, daß jeder extrudierte Isoliermaterialstreifen (5, 6) eine Dicke von über 0,1 cm besitzt.

6. Verfahren nach einem der Ansprüche 1 bis 4, dadurch gekennzeichnet, daß jeder aus Isoliermaterial extrudierte Streifen (5, 6) einen Fluiditätsindex zwischen 0,1 und 40 g pro 10 nm aufweist.

7. Verfahren nach Anspruch 1, dadurch gekennzeichnet, daß die Epoxidschicht (2) in Form eines elektrostatisch pulverisierten und durch Verschmelzen agglomerisierten Epoxidpulvers abgelagert wird.

8. Verfahren nach Anspruch 1, dadurch gekennzeichnet, daß man vor dem Erhitzen der Rohrleitung (1) eine Anfärbung ihrer äußeren Oberfläche durchführt.

9. Verfahren nach Anspruch 1, dadurch gekennzeichnet, daß man die umhüllte Rohrleitung (1) abkühlt.

10. Verfahren nach einem der vorhergehenden Ansprüche, dadurch gekennzeichnet, daß die periphere Verlagerungsgeschwindigkeit der Rohrleitung (1) mehr als 0,1 m/s beträgt.

11. Vorrichtung zum Umhüllen einer Rohrleitung (1) mit einem thermischen Isoliermantel nach einem Verfahren gemäß einem der vorhergehenden Ansprüche, dadurch gekennzeichnet, daß sie ein Gehäuse (20), welches Führungs- und Antriebsrollen (21) zum Verlagern und Rotieren der Rohrleitung (1) aufweist, wobei die Achsen der Rollen (21) hinsichtlich der geraden Querschnittsebene der Rohrleitung (1) geneigt sind, und, in der Reihenfolge der Verlagerungsrichtung der Rohrleitung, folgende Bestandteile umfaßt:
- Mittel (11) zum Erhitzen der Rohrleitung (1) auf eine Temperatur über 50 °C,
- einen Behälter (12) zum Pulverisieren eines Epoxidpulvers auf der äußeren Oberfläche der Rohrleitung (1),
- Mittel (13) zum Zuführen und Aufrollen eines Polypropylencopolymer-Klebstoffstreifens (4) in zähflüssigem Zustand um die Epoxidschicht (2) herum, welche, bezogen auf das Gehäuse (1), seitlich angeordnet sind,
- und Mittel (14) zum Zuführen und Aufrollen wenigstens eines Streifens (5, 6) zumindest eines Isoliermaterials, dessen Dicke mehr als 10 mm beträgt, in zähflüssigem Zustand um den Klebstoffmaterialstreifen (4), welche, bezogen auf das Gehäuse (20), seitlich angeordnet sind, wobei die chemische Zusammensetzung jedes Isoliermaterialstreifens (5, 6) ein Polypropylencopolymer, ein Polypropylen, ein Polypropylen, enthaltend ein thermoplastisches Polyolefin, ein Polypropylen, welches Metallgranulate und/oder Mineralstoffe enthält, und/oder ein Polypropylen, enthaltend ein Schaummittel und/oder ein Feuerfestigkeitsmittel und/oder ein Mittel zum Schutz gegen ultraviolette Strahlen und/oder Stöße und/oder zum Schutz gegen Abrieb, ist.

12. Vorrichtung nach Anspruch 11, dadurch gekennzeichnet, daß sie außerdem Mittel (16) zum Anfärben der äußeren Oberfläche der Rohrleitung (1) umfaßt, welche, bezogen auf die Verlagerungsrichtung der Rohrleitung (1), oberhalb der Mittel (11) zum Erhitzen angeordnet sind.

13. Vorrichtung nach Anspruch 11, dadurch gekennzeichnet, daß sie einen Behälter (15) zum Abkühlen der umhüllten Rohrleitung (1) umfaßt, der, bezogen auf die Verlagerungsrichtung der Rohrleitung (1), unterhalb der Mittel (14) zum Zuführen und Aufrollen der Streifen (5, 6) angeordnet ist.

14. Vorrichtung nach Anspruch 11, dadurch gekennzeichnet, daß die Mittel (13, 14) zum Zuführen und Aufrollen der Streifen (4, 5, 6) in zähflüssigem Zustand durch Extruder gebildet werden.

15. Mit einem Isoliermantel umhüllte Rohrleitung, erhalten durch ein Verfahren nach einem der Ansprüche 1 bis 10, dadurch gekennzeichnet, daß der Mantel nacheinander aufweist:
- eine durch Schmelzen agglomerisierte Epoxidschicht (2),
- einen Polypropylencopolymer-Klebstoffstreifen (4), der in zähflüssigem Zustand um die Epoxidschicht aufgerollt wurde
- und mindestens einen Polypropylenstreifen (5), der in zähflüssigem Zustand auf den Klebstoffstreifen aufgerollt wurde und dessen Dicke mehr als 10 mm beträgt.

16. Rohrleitung nach Anspruch 15, dadurch gekennzeichnet, daß der Isoliermantel eine äußere Schicht (6) aus Polypropylen in Verbindung mit thermoplastischem Polyolefin und/oder Schaummittel und/oder Feuerfestigkeitsmittel und/oder Mitteln zum Schutz gegen ultraviolette strahlen und/oder Stöße und/oder zum Schutz gegen Abrieb aufweist.

17. Rohrleitung nach Anspruch 16, dadurch gekennzeichnet, daß die Polypropylenschicht (5) Metallgranulate und/oder Mineralstoffe enthält.

18. Rohrleitung nach Anspruch 15, dadurch gekennzeichnet, daß die äußere Oberfläche der Rohrleitung (1) zuvor angefärbt wurde.
